# EUROPÄISCHE PATENTSCHRIFT

(11) **EP 2 870 875 B1**
(45) Veröffentlichungstag und Bekanntmachung des Hinweises auf die Patenterteilung: **17.07.2019**
(21) Anmeldenummer: 14189943.5
(22) Anmeldetag: 22.10.2014
(51) Int. Cl.: A01M 7/00, F16K 31/04, F16K 3/24, H02K 7/06, H02K 7/14

(54) **Ventilanordnung für Spritzvorrichtungen für die Landtechnik und Feldspritze**
Valve assembly for syringe devices for agricultural technology and field sprayer
Système de valves pour dispositifs de pulvérisation agricole et pulvérisateur

(30) Priorität: 08.11.2013 DE 102013222743
(43) Veröffentlichungstag der Anmeldung: 13.05.2015
(73) Patentinhaber: Lechler GmbH, 72555 Metzingen (DE)
(72) Erfinder: Rempp, Wolfgang, 70190 Stuttgart (DE)
(74) Vertreter: Patentanwälte Ruff, Wilhelm, Beier, Dauster & Partner mbB

(56) Entgegenhaltungen:
- EP-A2- 0 889 266
- WO-A1-2007/134471
- DE-A1-102010 051 580

## Beschreibung

Die Erfindung betrifft eine Ventilanordnung für Spritzvorrichtungen für die Landtechnik, wobei die Ventile jeweils einen Ventilkörper, der relativ zu einem Ventilsitz wenigstens eine Freigabestellung und eine Sperrstellung einnehmen kann, einem Elektromotor zum Bewegen des Ventilsitzes und/oder des Ventilköpers in die Freigabestellung und die Sperrstellung und einem elektrischen Energiespeicher zum Bereitstellen von elektrischer Energie für den Elektromotor aufweisen. Die Erfindung betrifft auch eine Feldspritze mit einer erfindungsgemäßen Ventilanordnung. Die Dokumente DE 10 2010 051 580 A1 und WO 2007/134471 A1 stellen den relevanten Stand der Technik dar.

Mit der Erfindung soll eine verbesserte Ventilanordnung für Spritzvorrichtungen für die Landtechnik und eine verbesserte Feldspritze bereitgestellt werden. Erfindungsgemäß ist hierzu eine Ventilanordnung mit den Merkmalen von Anspruch 1 sowie eine Feldspritze mit den Merkmalen von Anspruch 12 vorgesehen.

Die erfindungsgemäße Ventilanordnung weist somit mehrere Ventile auf, die jeweils einen Ventilkörper, der relativ zu einem Ventilsitz wenigstens eine Freigabestellung und eine Sperrstellung einnehmen kann, einen Elektromotor zum Bewegen des Ventilsitzes und/oder des Ventilkörpers in die Freigabestellung und die Sperrstellung und einen elektrischen Energiespeicher zum Bereitstellen von elektrischer Energie für den Elektromotor aufweisen, wobei ein Spannungswandler vorgesehen ist, der ausgebildet ist, in einem ersten Betriebsmodus eine von dem Energiespeicher bereitgestellte erste Spannung in eine zweite, höhere Spannung zur Beaufschlagung des Elektromotors beim Bewegen des Ventilkörpers und/oder des Ventilsitzes umzuwandeln und in einem zweiten Betriebsmodus den Energiespeicher mit niedriger Energieaufnahme zu laden. Der Erfindung liegt die Erkenntnis zugrunde, dass bei einem Ausfall der kabelgebundenen oder externen Stromversorgung für ein elektrisches Ventil auch die von einem Energiespeicher am Ventil selbst bereitgestellte Spannung nicht unter allen Umständen ausreicht, um das Ventil mittels des Elektromotors in eine vordefinierte Stellung zu verfahren. Je nach Anforderung kann dies die Freigabestellung oder die Sperrstellung sein. Beispielsweise wird kurzfristig ein höheres Drehmoment des Elektromotors benötigt, um den Ventilkörper und/oder den Ventilsitz gegen den anliegenden Flüssigkeitsdruck zu bewegen. Um ein solches höheres Drehmoment des Elektromotors zu bewirken, ist ein Spannungswandler vorgesehen, der in einem ersten Betriebsmodus, der auch als Boost-Betrieb bezeichnet wird, eine von dem Energiespeicher bereitgestellte erste Spannung in eine zweite, höhere Spannung zur Beaufschlagung des Elektromotors beim Bewegen des Ventilkörpers und/oder des Ventilsitzes umwandelt. Durch die höhere Ausgangsspannung des Spannungswandlers kann der Elektromotor ein ausreichend hohes Drehmoment und/oder eine ausreichend hohe Drehzahl bereitstellen, um das Ventil zuverlässig auch bei einem Ausfall der kabelgebundenen oder externen Energieversorgung zu schließen. Der Energiespeicher selbst kann dadurch vergleichsweise klein und kostengünstig, beispielsweise mit geringerer Nennspannung als der Elektromotor, aufgebaut sein und dennoch kann sichergestellt werden, dass das Ventil bei einem Ausfall der kabelgebundenen oder externen Energieversorgung zuverlässig in die vorgegebene Notstellung geht. Darüber hinaus kann mittels des Energiespeichers sichergestellt werden, dass auch in einem Normalbetrieb, aber ohne Ausfall der Stromversorgung der Feldspritze, alle Ventile der Feldspritze gleichzeitig geöffnet oder geschlossen werden können, ohne die Stromversorgung zu überlasten.

Der Spannungswandler ist ausgebildet, in einem zweiten Betriebsmodus den Energiespeicher mit niedriger Stromaufnahme zu laden.

In einem solchen sogenannten Buck-Betrieb kann dann der Energiespeicher über einen etwas längeren Zeitraum mit niedrigerer definierter Stromaufnahme aufgeladen werden, so dass die Energieversorgung der Spritzvorrichtung nicht überlastet wird. Speziell kann dadurch das Problem gelöst werden, dass bei großen Spritzvorrichtungen, beispielsweise Feldspritzen, das elektrische System eines Zugfahrzeugs nicht ausreichend leistungsfähig ist, um die hohe Anzahl an Ventilen gleichzeitig mit ausreichender elektrischer Energie zu versorgen, um einen gleichzeitigen Schaltvorgang an allen Ventilen vorzunehmen. Feldspritzen können beispielsweise eine Arbeitsbreite von 42 m aufweisen, wobei dann üblicherweise alle 50 cm eine Düse mit einem Ventil vorgesehen ist. Die gleichzeitige Stromaufnahme von 84 Ventilen bei einem Öffnungsvorgang oder einem Schließvorgang überfordert aber in der Regel die elektrische Anlage eines Zugfahrzeugs für die Feldspritze. Mit der Erfindung kann somit nicht nur die gleichzeitige Betätigung aller elektrischen Ventile auf einer Feldspritze sichergestellt werden, darüber hinaus wird es auch ermöglicht, bei einem Ausfall der elektrischen Energieversorgung jedes Ventil noch in eine vordefinierte Notstellung zu verfahren. Das Aufladen der Energiespeicher erfolgt im Buck-Betrieb mit niedriger Stromaufnahme, so dass die elektrische Anlage eines Zugfahrzeugs nicht überlastet wird.

In Weiterbildung der Erfindung ist der Spannungswandler ausgebildet, die Stromaufnahme im zweiten Betriebsmodus zu steuern oder zu regeln.

Dadurch kann sichergestellt werden, dass auch bei zahlreichen Ventilen eine Stromversorgung nicht überlastet wird und alle Energiespeicher gleich schnell geladen werden.

In Weiterbildung der Erfindung ist im zweiten Betriebsmodus eine dritte Spannung zum Laden des Energiespeichers niedriger als eine Versorgungsspannung des Spannungswandlers.

Auch auf diese Weise ist sichergestellt, dass die Energieversorgung beim Laden der mehreren Energiespeicher nicht überlastet wird und speziell nur ein Teil der insgesamt bereitgestellten Leistung für das Laden der Energiespeicher verwendet wird.

In Weiterbildung der Erfindung ist der Spannungswandler als Gleichspannungswandler ausgebildet.

Geeignete Gleichspannungswandler werden als Gleichstromsteller, Zweiquadrantensteller, Synchronwandler, Hoch-/Tiefsetzsteller oder vor allem auch als Buck-/Boost-Konverter bezeichnet. Wesentlich ist dabei, dass der Stromfluss bei einem motorischen Betrieb vom Energiespeicher über den Gleichspannungswandler zum Elektromotor geht, in einem Ladebetrieb hingegen von einer elektrischen Energieversorgung über den Gleichspannungswandler zum Energiespeicher.

In Weiterbildung der Erfindung ist der Energiespeicher als Kondensator, insbesondere Superkondensator, ausgebildet.

Kondensatoren, insbesondere Superkondensatoren, sind vergleichsweise kompakt aufgebaut und stellen dennoch eine hohe elektrische Energiedichte zur Verfügung. Superkondensatoren können als sogenannte Supercaps, Doppelschichtkondensatoren, elektrochemische Kondensatoren oder Hybridkondensatoren ausgebildet sein. Allen Kondensatoren ist dabei gemein, dass sie über einen etwas längeren Zeitraum mit geringeren Stromaufnahme aufgeladen werden können, für einen motorischen Betrieb aber kurzfristig eine große elektrische Leistung zur Verfügung stellen können.

In Weiterbildung der Erfindung ist ein Ventilgehäuse vorgesehen, wobei der Elektromotor, der Spannungswandler und eine Ventilsteuerschaltung für den Elektromotor und den Spannungswandler innerhalb des Ventilgehäuses angeordnet sind und wobei der Spannungswandler, der Energiespeicher und die Ventilsteuerschaltung von einer wasserdichten Vergussmasse umgeben sind.

Auf diese Weise können sehr kurze Signalwege bei der Weiterleitung von Signalen realisiert werden. Auch ist es dadurch möglich, den Elektromotor, den Spannungswandler und die Ventilsteuerschaltung für den Elektromotor und Spannungswandler geschützt innerhalb des Ventilgehäuses anzuordnen. Vorteilhafterweise ist auch der Energiespeicher selbst innerhalb des Ventilgehäuses angeordnet. Durch das Vergießen der Elektronik ist diese zuverlässig gegen Witterungseinflüsse aber auch gegen schädliche Einflüsse von Pflanzenschutzmitteln oder Reinigungsmitteln, beispielsweise beim Hochdruckreinigen, geschützt.

In Weiterbildung der Erfindung ist ein Deckel des Ventilgehäuses mittels der Vergußmasse abgedichtet.

Durch Vergießen des Deckels mit dem Gehäuse kann auch der innerhalb des Ventilgehäuses angeordnete Elektromotor gegen Einflüsse von außen geschützt werden.

In Weiterbildung der Erfindung ist das Ventilgehäuse mit einer Belüftungsöffnung versehen, wobei die Belüftungsöffnung mit einer wasserdichten aber luftdurchlässigen Membran verschlossen ist.

Das Anbringen einer luftdurchlässigen aber wasserundurchlässigen Membran kann ein Druckausgleich bei beispielsweise starken Temperaturschwankungen erreicht werden. Die Bildung von Kondenswasser innerhalb des Gehäuses wird verhindert. Hierdurch wird der im Ventilgehäuse angeordnete Elektromotor geschützt. Die Membran ist dabei so am Gehäuse angebracht, beispielsweise versenkt unterhalb eines durchbrochenen Schutzdeckels, dass eine Reinigung der Feldspritze mittels Hochdruckreiniger die Membrane nicht beschädigen kann.

In Weiterbildung der Erfindung ist der Elektromotor als Schrittmotor ausgebildet. Vorteilhafterweise ist eine vom Elektromotor beaufschlagte Schraubenspindel zum Bewegen des Ventilkörpers vorgesehen.

Mittels einer Schraubenspindel können hohe Losbrechmomente und hohe Haltekräfte für den Ventilkörper und/oder den Ventilsitz erzeugt werden. Vorteilhafterweise ist die Schraubenspindel selbsthemmend ausgeführt. Die Verwendung eines Schrittmotors ermöglicht es, ohne zusätzliche Sensoren die Drehstellung des Schrittmotors durch die Ventilsteuerschaltung auf einen vorgegebenen Wert einzustellen.

In Weiterbildung der Erfindung ist das Ventilgehäuse mit zwei elektrischen Steckverbindern versehen.

Auf diese Weise können auf einer Feldspritze nebeneinander angeordnete Ventile durch einfach einzusteckende Kabel miteinander verbunden werden. Dadurch wird ein modularer Aufbau erzielt. Beim Ausrüsten einer Feldspritze mit den erfindungsgemäßen Ventilen und vor allem beim Verkabeln dieser Ventile können dadurch standardisierte Kabel mit jeweils zwei Steckverbindern verwendet werden, und es ist keine spezielle Kabelkonfektion notwendig. Üblicherweise sind bei Feldspritzen die Düsenträger mit den Ventilen im Abstand von 50 cm angeordnet. Stehen vorkonfektionierte Kabel mit jeweils zwei Steckern zur Verfügung, so kann eine beliebige Anzahl von Ventilen mittels dieser vorkonfektionierten Kabel miteinander verbunden werden.

In Weiterbildung der Erfindung ist das Ventilgehäuse mit zwei elektrischen Anschlusskabeln versehen, wobei jedes Anschlusskabel mit einem elektrischen Steckverbinder versehen ist und wobei die Steckverbinder passend zueinander ausgebildet sind.

Die Kabel sind beispielsweise für Standard-Düsenabstände von 50 cm an jedem Ventil vorgesehen. Die Durchführungen der Anschlusskabel durch das Ventilgehäuse können dadurch zuverlässig abgedichtet werden, da sie ja bereits bei der Herstellung des Ventils angebracht werden. Während der Installation der Ventilanordnung auf einer Feldspritze sind dadurch aber Fehler ausgeschlossen, da die Steckverbinder von unterschiedlichen Ventilen nur in der korrekten Weise ineinander eingesteckt werden können. Der Montageaufwand ist dadurch verringert und eine einfache und fehlerfreie Montage ist sichergestellt. Weiter besteht ein verringerter Aufwand seitens eines Herstellers für die Lagerhaltung und die Logistik. Für die Montage an Gelenkstellen am Gestänge der Feldspritze oder für den Anschluss der Ventile an einer Zentralsteuerung der Feldspritze sind Verlängerungskabel vorgesehen. Neben dem reduzierten Montageaufwand ist das Ventil auf diese Weise auch servicefreundlich aufgebaut. Bei einem nötigen Austausch eines Ventils kann dieses nicht fehlerhaft angeschlossen werden. Durch geeignete Ausbildung der Ventilsteuerung kann diese sich automatisch konfigurieren.

In Weiterbildung der Erfindung ist eine Ventilsteuerung innerhalb des Gehäuses angeordnet und für den Betrieb an einer Busleitung ausgebildet.

Der Betrieb an einer Busleitung erleichtert die Steuerung der erfindungsgemäßen Ventile erheblich. Die einzelnen Ventile können seriell miteinander verbunden werden und werden dann über Bussignale angesteuert. Beispielsweise kann ein vieradriges Kabel verwendet werden. Die einzelnen Ventile können mittels einer Weiterschaltung auf der Platine nach der Montage auf der Maschine oder nach einem Reparaturfall einfach und bedienerfreundlich konfiguriert werden. Die Steuerung fragt automatisch die einzelnen Positionen der Ventile ab und speichert diese. Darüber hinaus ist es auch möglich, einen Signalaustausch zwischen den einzelnen Ventilen bei einer Statusabfrage zu ermöglichen. Auf diese Weise kann auch ein Kabelbruch oder eine lose Steckverbindung lokalisiert werden. Sind beispielsweise zehn Ventile seriell hintereinander geschaltet und antworten bei einer Statusabfrage nur die ersten fünf Ventile, so kann davon ausgegangen werden, dass ein Kabelbruch oder eine Unterbrechung zwischen dem fünften und dem sechsten Ventil vorliegt. Die Ventilsteuerung empfängt Signale von einer übergeordneten Steuereinheit, beispielsweise auf einem Zugfahrzeug, und setzt diese in Ansteuersignale für den Schrittmotor um. Die Ventilsteuerung überwacht beispielsweise auch die Eingangsspannung und Ausgangsspannung des Ventils. Stellt die Ventilsteuerung fest, dass die Eingangsspannung unter einen vordefinierten Wert gesunken ist, wird ein Notbetrieb veranlasst, indem in einem Boost-Betrieb der Elektromotor mit einer zweiten, höheren Spannung beaufschlagt wird und dann den Ventilkörper und/oder den Ventilsitz in eine vordefinierte Notstellung verfahren kann. Mittels der Ventilsteuerung wird auch der Ladezustand des Energiespeichers überwacht und erforderlichenfalls ein Buck-Betrieb zum Aufladen des Energiespeichers mit niedriger Stromaufnahme eingestellt.

Das der Erfindung zugrundeliegende Problem wird auch durch eine Feldspritze mit einer erfindungsgemäßen Ventilanordnung gelöst. Vorteilhafterweise sind die Ventile untereinander elektrisch mittels einer Kabelzuleitung verbunden, wobei die Kabelzuleitung von einem ersten Ventil zu einem zweiten benachbarten Ventil in den ersten Steckverbinder eingesteckt ist und die Kabelzuleitung von dem ersten Ventil zu einem dritten benachbarten Ventil in den zweiten Steckverbinder eingesteckt ist.

Auf diese Weise kann ein modularer Aufbau erzielt werden, und auf dem Gestänge der Feldspritze nebeneinander angeordnete Ventile können problemlos mittels vorkonfektionierter Kabel verbunden werden.

In Weiterbildung der Erfindung ist jedes Ventilgehäuse mit zwei elektrischen Anschlusskabeln mit jeweils einem elektrischen Steckverbinder versehen, wobei die Ventile untereinander mittels der Anschlusskabel verbunden sind und wobei ein erstes Anschlusskabel eines ersten Ventils zu einem Anschlusskabel eines zweiten, benachbarten Ventils führt und ein zweites Anschlusskabel des ersten Ventils zu einem Anschlusskabel eines dritten, benachbarten Ventils führt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen Ausführungsformen und wie sie in den Zeichnungen dargestellt sind, können in beliebiger Weise miteinander kombiniert werden, ohne den Rahmen der Erfindung zu überschreiten. In den Zeichnungen zeigen:
- Fig. 1: eine Vorderansicht eines erfindungsgemäßen Ventils gemäß einer ersten Ausführungsform,
- Fig. 2: eine Seitenansicht des Ventils der Fig. 1,
- Fig. 3: eine Ansicht des Ventils der Fig. 1 von hinten,
- Fig. 4: eine Vorderansicht des Ventils der Fig. 1,
- Fig. 5: eine Ansicht auf die Schnittebene A-A in Fig. 2,
- Fig. 6: eine Ansicht auf die Schnittebene B-B in Fig. 3,
- Fig. 7: eine Ansicht auf die Schnittebene C-C in Fig. 4,
- Fig. 8: eine schematische Darstellung einer erfindungsgemäßen Feldspritze,
- Fig. 9: ein schematischesErsatzschaltbild eines erfindungsgemäßen Ventils,
- Fig. 10: eine schematische Darstellung einer erfindungsgemäßen Feldspritze gemäß einer weiteren Ausführungsform der Erfindung,
- Fig. 11: eine Seitenansicht eines erfindungsgemäßen Ventils gemäß einer zweiten Ausführungsform,
- Fig. 12: eine Vorderansicht des Ventils der Figur 11,
- Fig. 13: eine Ansicht des Ventils der Figur 11 von oben,
- Fig. 14: eine teilweise Schnittansicht des Ventils der Figur 13,
- Fig. 15: eine teilweise Schnittansicht des Ventils der Figur 12,
- Fig. 16: eine teilweise Schnittansicht des Ventils der Figur 11 und
- Fig. 17: eine abschnittsweise Darstellung einer erfindungsgemäßen Ventilanordnung mit mehreren erfindungsgemäßen Ventilen.

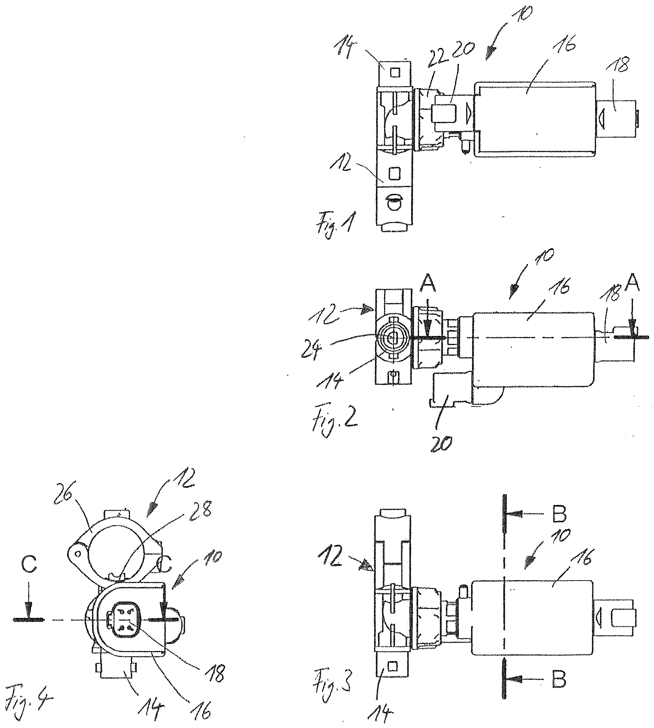

Fig. 1 zeigt ein erfindungsgemäßes Ventil 10, das an einem Düsenträger 12 angeordnet ist. Der Düsenträger 12 wird an einem nicht dargestellten Zuleitungsrohr befestigt und weist einen Anschluss 14 zur Montage einer nicht dargestellten Spritzdüse auf. Zu versprühende Flüssigkeit gelangt von dem Düsenrohr durch den Düsenträger 12 hindurch zu dem Anschluss 14 und zu der Spritzdüse. Diese Strömungsverbindung zwischen dem Düsenrohr und der Spritzdüse kann mittels des Ventils 10 abgesperrt oder freigegeben werden.

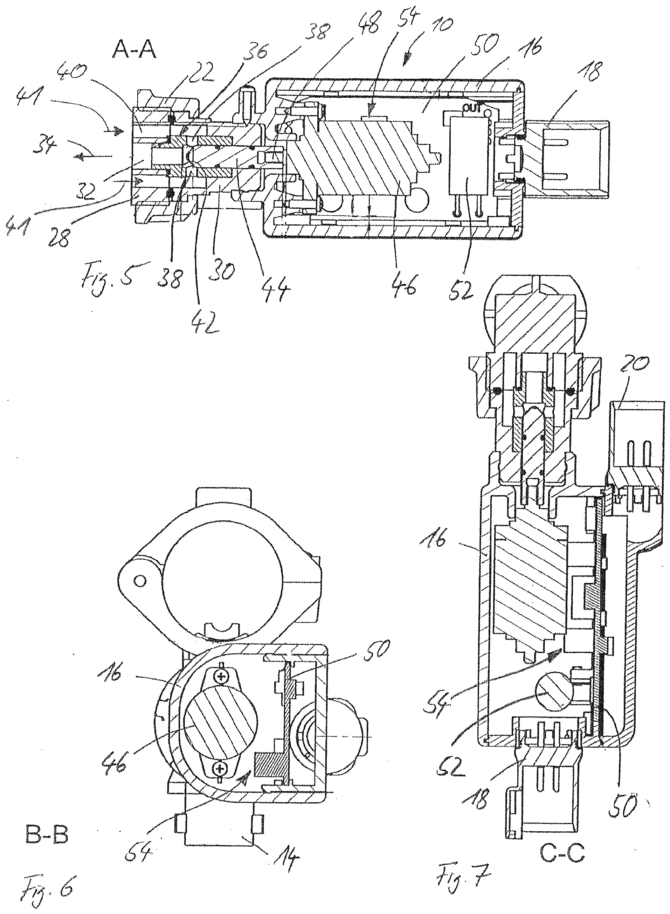

Das Ventil 10 weist ein Düsengehäuse 16 auf, in dem ein Ventilkörper, ein Ventilsitz, ein Schrittmotor zum Bewegen des Ventilkörpers, ein elektrischer Energiespeicher sowie eine Ventilsteuerschaltung angeordnet sind, wie noch anhand der Fig. 5 bis 7 erläutert wird. Das Ventilgehäuse 16 ist mit zwei elektrischen Steckverbindern 18 und 20 versehen, in die jeweils eine Kabelzuleitung eingesteckt werden kann. Das Ventilgehäuse 16 ist mittels einer Überwurfmutter 22 an einem passenden Außengewindeflansch des Düsenträgers 12 befestigt.

Die Darstellung der Fig. 2 zeigt eine Ansicht des Ventils 10 und des Düsenträgers 12 von unten. Zu erkennen ist der Anschluss 14 für die Spritzdüse sowie ein Kanal 24 innerhalb des Düsenträgers 12, der, wie ausgeführt wurde, mittels des Ventilkörpers des Ventils 10 freigegeben oder abgesperrt werden kann.

Die Darstellung der Fig. 3 zeigt das Ventil 10 und den Düsenträger 12 von der Seite. In dieser Ansicht ist der Anschluss 14 für die Spritzdüse unten angeordnet.

Die Darstellung der Fig. 4 zeigt das Ventil 10 und den Düsenträger 12 von hinten. Der Düsenträger 12 weist eine Schelle 26 auf, die um ein nicht dargestelltes Zuleitungsrohr gelegt werden kann, um den Düsenträger 12 an diesem Zuleitungsrohr zu befestigen. Das Zuleitungsrohr weist an seiner Unterseite eine Öffnung auf, in die ein Rohrstutzen 28 des Düsenträgers 12 eingreift. Durch diesen Rohrstutzen 28 gelangt die zu versprühende Flüssigkeit in den Düsenträger 12 und letztendlich zu dem Anschluss 14 für eine Spritzdüse.

In der Darstellung der Fig. 4 zu erkennen ist der Steckverbinder 18. Der Steckverbinder 18 weist insgesamt vier Kontakte auf und ist für ein vieradriges Kabel vorgesehen.

Anhand der Ansichten der Fig. 1 bis 4 ist zu erkennen, dass das Ventilgehäuse 16 geschlossen ist, um die darin angeordneten Bauteile des Ventils 10 geschützt gegen Schmutz und Flüssigkeit unterzubringen.

Fig. 5 zeigt eine Ansicht auf die Schnittebene A-A in Fig. 2. Der Düsenträger 12 ist lediglich abschnittsweise dargestellt und speziell ist nur ein Außengewindeflansch 28 des Düsenträgers 12 dargestellt, auf den die Überwurfmutter 22 des Ventils aufgeschraubt wird und auf den ein Anschlussstutzen 30 des Ventils 10 angesetzt wird. In der Darstellung der Fig. 5 ist zu erkennen, dass die zu versprühende Flüssigkeit in einen Ringkanal 40 des Außengewindeflansches 28 in Richtung der Pfeile 41 einströmt und dadurch zu einem Ventilsitz 36 des Ventils 10 gelangt. Ausgehend vom Ventilsitz 36 strömt die zu versprühende Flüssigkeit über zwei Querbohrungen 38 in einen Zentralkanal 32, der von dem Ringkanal 40 umgeben ist. Im Zentralkanal 32 strömt die Flüssigkeit in Richtung des Pfeils 34. Das Ventilsitzbauteil 36 weist den eigentlichen Ventilsitz 42 auf, der mittels eines Ventilkörpers 44 verschlossen oder freigegeben werden kann. In der Darstellung der Fig. 5 ist der Ventilsitz freigegeben und zu versprühende Flüssigkeit kann vom Ringkanal 40 aus den Ventilsitz 42 passieren und in den Zentralkanal 32 eintreten. Wird ausgehend von der Freigabestellung der Fig. 5 der Ventilkörper 44 in der Darstellung der Fig. 5 nach links bewegt, bis sein abgerundetes vorderes Ende auf dem Ventilsitz 42 aufliegt, ist eine Strömungsverbindung zwischen dem Zentralkanal 32 und dem Ringkanal 40 unterbrochen. Das Ventil 10 befindet sich damit in einer Sperrstellung.

Der Ventilkörper 44 ist stabförmig ausgebildet und wird mittels eines elektrischen Schrittmotors 46 bewegt. Der Schrittmotor 46 dreht eine Schraubenspindel 48, die wiederum in einem passenden Innengewinde in einer Sackbohrung des Ventilkörpers 44 angeordnet ist. Eine Drehung des Schrittmotors 46 führt zu einer axialen Bewegung der Schraubenspindel 48 und zu einer Verschiebebewegung des Ventilkörpers 44, ausgehend von der Darstellung der Fig. 5 nach links in Richtung auf den Ventilsitz 42 zu. Ausgehend von der Sperrstellung wird die Schraubenspindel 48 in umgekehrter Richtung gedreht, um den Ventilkörper 44 wieder von dem Ventilsitz 42 wegzubewegen und das Ventil 10 in die Freigabestellung zu bewegen.

Innerhalb des Ventilgehäuses 10 ist neben dem Schrittmotor 46 eine Platine 50 angeordnet, auf der neben einem Superkondensator 52 eine in Fig. 5 lediglich abschnittsweise zu erkennende Ventilsteuerschaltung 54 angeordnet ist. Fig. 5 ist zu entnehmen, dass die Platine 50 mit dem Superkondensator 52 und der Ventilsteuerschaltung 54 innerhalb des Ventilgehäuses 16 angeordnet ist. Auch der Schrittmotor 46 ist innerhalb des Ventilgehäuses 16 angeordnet. Sämtliche elektrischen bzw. elektronischen Bauteile des Ventils 10 sind damit geschützt innerhalb des Ventilgehäuses 16 angeordnet. Die Ventilsteuerschaltung 54 ist für einen Busbetrieb ausgelegt, insbesondere für den Betrieb mit einem CAN-Bus. Die Anschlüsse der Steckverbinder 18, 20 sind mit der Ventilsteuerschaltung 54 verbunden.

Fig. 6 zeigt eine Ansicht auf die Schnittebene B-B in Fig. 3. Innerhalb des Ventilgehäuses 16 ist der Schrittmotor 46 sowie die Platine 50 mit der Ventilsteuerschaltung 54 zu erkennen. Die Ventilsteuerschaltung 54 weist einen Spannungswandler auf, der in einem ersten Betriebsmodus, der auch als Boost-Betrieb bezeichnet wird, eine von dem als Energiespeicher wirkenden Superkondensator 52 bereitgestellte erste Spannung in eine zweite, höhere Spannung zur Beaufschlagung des Schrittmotors 46 umsetzen kann. Diese höhere Ausgangsspannung bewirkt, dass der Schrittmotor 46 ein höheres Drehmoment aufbringen kann, um den Ventilkörper 44 zuverlässig - ausgehend von einer Freigabestellung in eine Sperrstellung - oder umgekehrt zu bewegen.

Dieser Boost-Betrieb der Ventilsteuerschaltung 54 wird in jedem Fall dann eingestellt, wenn ein Ausfall einer externen Energieversorgung des Ventils 10 erkannt wurde. Im Normalbetrieb wird der Schrittmotor mit der externen Versorgungsspannung beaufschlagt, die beispielsweise durch die elektrische Anlage eines Zugfahrzeugs bereitgestellt wird. Der Boost-Betrieb wird dadurch eingestellt, dass mit der Ventilsteuerschaltung 54 die Eingangsspannung und die Ausgangsspannung des Ventils 10 überwacht werden. Sinkt die Eingangsspannung unter einen vordefinierten Wert ab, so wird von einem Ausfall der externen Energieversorgung ausgegangen und der Spannungswandler wird in den Boost-Betrieb versetzt und das Ventil 10 wird in die Sperrstellung bewegt. Üblicherweise wird das Ventil 10 bei einem Ausfall der externen Energieversorgung in die Sperrstellung bewegt. Es gibt jedoch durchaus länderspezifische Vorschriften, die verlangen, dass bei einem Ausfall der externen Energieversorgung das Ventil 10 in eine Freigabestellung bewegt wird. Auch diese Bewegung in die Freigabestellung würde im Boost-Betrieb der Ventilansteuerschaltung 54 erfolgen. Der Boost-Betrieb kann aber auch immer dann eingestellt werden, wenn das Ventil 10 geschlossen oder geöffnet werden soll, insbesondere dann, wenn mehrere Ventile 10 gleichzeitig geöffnet werden sollen. Der Boost-Betrieb stellt dann sicher, dass eine elektrische Energieversorgung, beispielsweise von einer Feldspitze, auch beim gleichzeitigen Betätigen mehrerer Ventile nicht überlastet wird.

Mittels der Ventilsteuerschaltung 54 wird auch der Ladezustand des Superkondensators 52 überwacht. Stellt die Ventilsteuerschaltung 54 fest, dass der Superkondensator 52 einen vorgegebenen Ladezustand unterschreitet, so stellt die Ventilsteuerschaltung 54 einen sogenannten Buck-Betrieb ein, in dem der Superkondensator 52 mit einer geringen Stromaufnahme über einen etwas längeren Zeitraum geladen wird. Der Spannungswandler ist hierzu als sogenannter Buck-/Boost-Konverter ausgebildet, und ermöglicht dadurch einen Stromfluss in zwei entgegengesetzten Richtungen, nämlich in einem Boost-Betrieb vom Superkondensator 52 über den Spannungswandler zum Schrittmotor 46 und in einem Buck-Betrieb von der externen elektrischen Energieversorgung zum Superkondensator 52.

Die Darstellung der Fig. 7 zeigt eine Ansicht auf die Schnittebene C-C in Fig. 4. In dieser Ansicht ist die innerhalb des Ventilgehäuses 16 angeordnet Platine 50 mit dem Superkondensator 52 und der Ventilsteuerschaltung 54 gut zu erkennen. Es ist auch zu erkennen, dass zwischen den Steckverbindern 18, 20 und der Platine 50 lediglich sehr kurze Wege zu überbrücken sind. Die elektrischen Signale werden mittels einer Weiterschaltung auf der Platine vom Eingangsstecker 20 zum Ausgangsstecker 18 weitergeleitet.

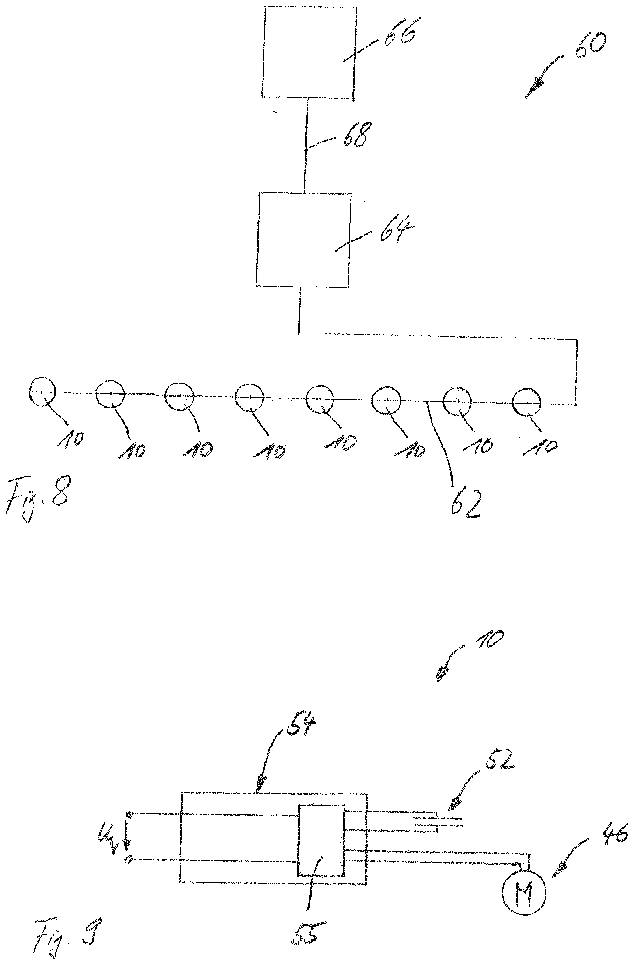

Die Darstellung der Fig. 8 zeigt schematisch eine Feldspritze 60 gemäß der Erfindung mit insgesamt acht erfindungsgemäßen Ventilen 10. Flüssigkeitsleitungen sind nicht dargestellt. Dargestellt ist lediglich eine CAN-Busleitung 62, die die einzelnen Ventile 10 seriell miteinander verbindet und die von einer Einzeldüsensteuerung 64 ausgeht. Die Einzeldüsensteuerung 64 ist dafür vorgesehen, in einem Normalbetrieb die Ventile 10 einzeln oder gemeinsam bzw. in Gruppen so anzusteuern, dass sich diese von der Freigabestellung in die Sperrstellung oder umgekehrt bewegen. Die Einzeldüsensteuerung 64 sendet Signale zu den einzelnen Ventilen 10 und empfängt auch Signale von den Ventilen 10. Hierzu sind die Ventilansteuerschaltungen 54 der einzelnen Ventile 10 so ausgebildet, dass sie beispielsweise auf Statusabfragen der Einzeldüsensteuerung 64 eine Rückmeldung über ihren Status geben, also beispielsweise ob sie in Betrieb sind, letztendlich also eine Rückmeldung darüber, ob sich das jeweilige Ventil 10 in einer Freigabestellung oder einer Sperrstellung befindet.

Mittels einer solchen Statusabfrage kann die Einzeldüsensteuerung 64 feststellen, ob noch alle Ventile 10 an der Busleitung 62 betriebsbereit sind. Fehlen beispielsweise die Rückmeldungen einzelner Ventile 10 oder wird eine erhöhte Stromaufnahme am einzelnen Ventil gemessen, so kann gegebenenfalls nicht nur auf den Ausfall des betreffenden Ventils, sondern beispielsweise auch auf einen Kabelbruch oder Kurzschluss geschlossen werden. Kommt beispielsweise bei einer Statusabfrage von den in Fig. 8 links angeordneten letzten drei Ventilen 10 keine Rückmeldung zu der Einzeldüsensteuerung 64, so kann auf einen Kabelbruch zwischen dem viertletzten und dem drittletzten Ventil 10 geschlossen werden. Erhalten die Ventile 10 keine Rückmeldung der Steuerung 64, beispielsweise bei einem Defekt in der BUS-Leitung, kann ebenfalls die Not-Aus-Steuerung aktiviert werden.

Fällt eine Energieversorgung der einzelnen Ventile 10 aus, die ebenfalls über die CAN-Bus-Leitung 62 erfolgt, so wird dies von den einzelnen Ventilsteuerschaltungen 54 erkannt, wie bereits erläutert wurde, und diese verursachen dann, dass die Ventile 10 alleine über die mittels des Superkondensators 52 bereitgestellten Energie in die Notstellung, insbesondere die Sperrstellung, bewegt werden.

Die Feldspritze 60 weist weiter eine Zentralsteuerung 66 auf, die über eine ISO-Busleitung 68 Signale an die Einzeldüsensteuerung 64 sendet und von dieser empfängt. Die Zentralsteuerung 66 weist beispielsweise ein Navigationsmodul auf und entscheidet auf Basis der aktuellen Position der Feldspritze 60, welche der Ventile 10 ein- und ausgeschaltet werden sollen. Die entsprechenden Befehle werden dann an die Einzeldüsensteuerung 64 gesendet, die diese Befehle dann umsetzt und an die Ventile 10 weitergibt. Die Einzeldüsensteuerung 64 kann bei Bedarf auch in der Zentralsteuerung 66 integriert sein.

In Fig. 9 ist schematisch ein Ersatzschaltbild eines erfindungsgemäßen Ventils 10 dargestellt. Das Ventil 10 weist die Ventilsteuerschaltung 54 auf, die mit dem Spannungswandler 55 versehen ist, wobei die Supercap über die Buck/Boost-Steuerung angekoppelt ist. Mit dem Spannungswandler 55 ist der Superkondensator 52 verbunden, sowie auch der Schrittmotor 46. Der Spannungswandler 55 ist darüber hinaus mit einer externen Energieversorgung mit einer Versorgungsspannung Uv verbunden, die beispielsweise durch die elektrische Anlage eines Zugfahrzeugs bereitgestellt wird.

In einem Normalbetrieb empfängt die Ventilsteuerschaltung 54 ein Signal von der Einzeldüsensteuerung 64, siehe Fig. 8, und beaufschlagt dann den Elektromotor, der hier als Schrittmotor 46 ausgebildet ist, mit der Versorgungsspannung Uv, um dadurch das Ventil 10 zu öffnen oder zu schließen. Es ist dabei möglich, den Elektromotor unter Umgehung der Buck/Boost-Steuerung des Spannungswandlers 55 zu beaufschlagen, auch wenn dies in der schematischen Darstellung der Fig. 9 nicht erkennbar ist. In einem Normalbetrieb wird somit der Superkondensator 52 nicht benützt sondern der Schrittmotor 46 wird alleine mittels der externen Energieversorgung angetrieben.

Mittels der Ventilsteuerschaltung 54 wird permanent die externe Versorgungsspannung U_{V} überwacht. Stellt die Ventilsteuerschaltung 54 fest, dass die Versorgungsspannung U_{V} unter einen vordefinierten Wert abgesunken ist, so wird von einem Ausfall der externen Stromversorgung ausgegangen und der Buck-/ Boost-Konverter wird in einen Boost-Betrieb versetzt, in der er die von dem Superkondensator 52 bereitgestellte Spannung in eine höhere Spannung zur Beaufschlagung des Elektromotors 46 umwandelt. In diesem Boost-Betrieb erfolgt dann das Schließen des Ventils 10 alleine durch die vom Superkondensator 52 bereitgestellte elektrische Energie. Wie ausgeführt wurde, kann je nach länderspezifischer Vorschrift in einem Notbetrieb das Freigeben des Ventils 10 vorgesehen sein.

Neben der Einstellung des Boost-Betriebs um bei einem Ausfall der externen Stromversorgung das Ventil 10 in eine Notstellung zu bewegen, überwacht die Ventilansteuerschaltung 54 auch die Ausgangsspannung bzw. den Ladezustand des Superkondensators 52. Stellt die Ventilansteuerschaltung 54 fest, dass der Ladezustand des Superkondensators 52 unterhalb eines vordefinierten Grenzwerts liegt, so wird die Buck/Boost-Steuerung des Spannungswandlers 55 in einen Buck-Betrieb versetzt, in dem dann der Superkondensator 52 mittels der Buck/Boost-Steuerung des Spannungswandlers 55 aus dem externen Energieversorgungsnetz aufgeladen wird. In diesem Buck-Betrieb sorgt der Buck-/ Boost-Konverter 55 für eine geringe Stromaufnahme beim Laden des Superkondensators 52, so dass die externe Energieversorgung auch dann nicht überlastet wird, wenn beispielsweise alle Superkondensatoren 52 der mehreren Ventile 10 gleichzeitig geladen werden.

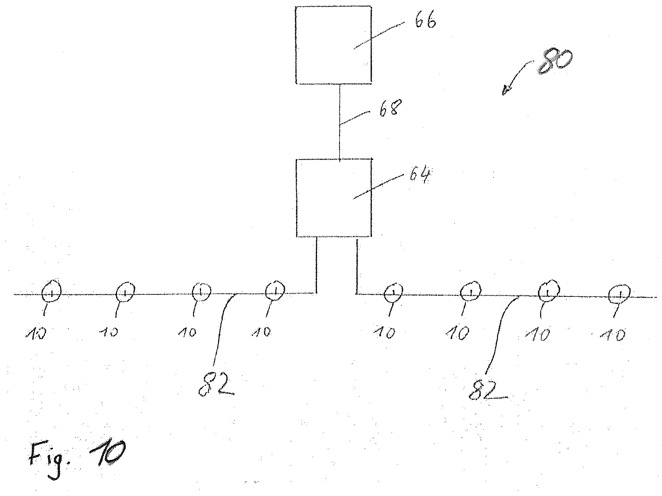

Fig. 10 zeigt schematisch eine Feldspritze 80 gemäß einer weiteren Ausführungsform der Erfindung. Ausgehend von der Einzeldüsensteuerung 64 sind die Ventile 10 mit jeweils einer Leitung nach links und nach rechts am Gestänge der Feldspritze montiert. Die Konfiguration erfolgt dann automatisch von einer Seite beginnend. Im Unterschied zu der Feldspritze 60 der Fig. 8 muss die Busleitung bzw. das Kabel 82 nicht von einem Ende des Gestänges zum anderen verlegt werden, sondern von der Mitte des Gestänges ausgehend führt die Busleitung nach links und rechts. Die Feldspritze 80 weist eine Zentralsteuerung 66 auf, die über eine Leitung 68 oder auch mehrere Leitungen mit der Einzeldüsensteuerung 64 verbunden ist.

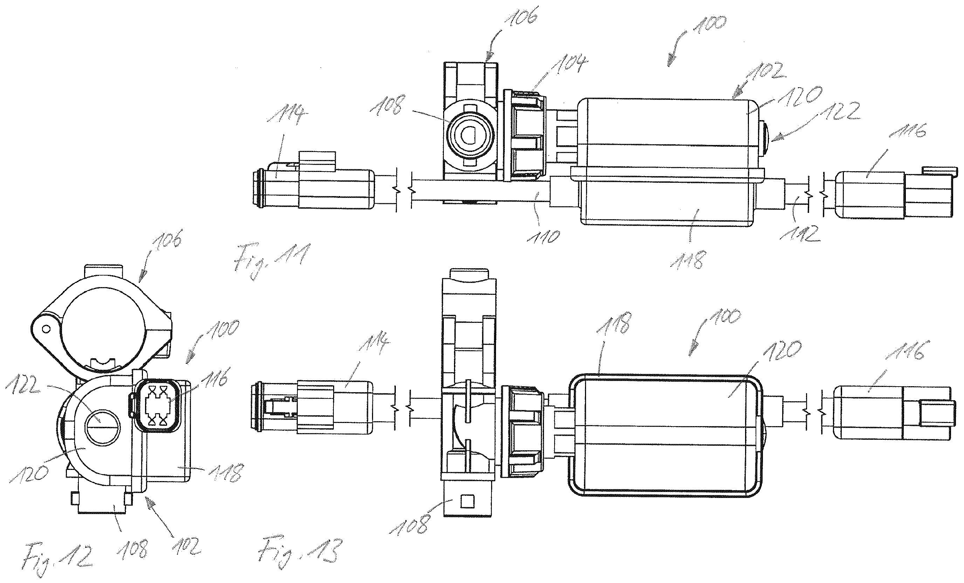

Die Darstellung der Fig. 11 zeigt in einer Seitenansicht ein Ventil 100 für eine erfindungsgemäße Ventilanordnung. Das Ventil 100 ist mit einem Ventilgehäuse 102 versehen, das mittels einer Überwurfmutter 104 auf einem passenden Gewinde eines Düsenträgers 106 befestigt ist. Der Düsenträger 106 wird, wie bereits anhand des Düsenträgers 12 der Fig. 1 erläutert wurde, an einem nicht dargestellten Zuleitungsrohr befestigt und weist einen Anschluss 108 zur Befestigung einer nicht dargestellten Spritzdüse auf. Eine Strömungsverbindung zwischen dem Zuleitungsrohr und der Spritzdüse bzw. dem Anschluss 108 kann mittels des Ventils 100 abgesperrt oder freigegeben werden.

Das Ventil 100 weist, wie das Ventil 10 der Fig. 1, einen Ventilkörper, einen Ventilsitz, einen Schrittmotor zum Bewegen des Ventilkörpers, einen elektrischen Energiespeicher sowie eine Ventilsteuerschaltung auf. Zur Vermeidung von Wiederholungen werden lediglich diejenigen Bestandteile des Ventils 100 erläutert, die sich von dem Ventil 10 der Fig. 1 unterscheiden.

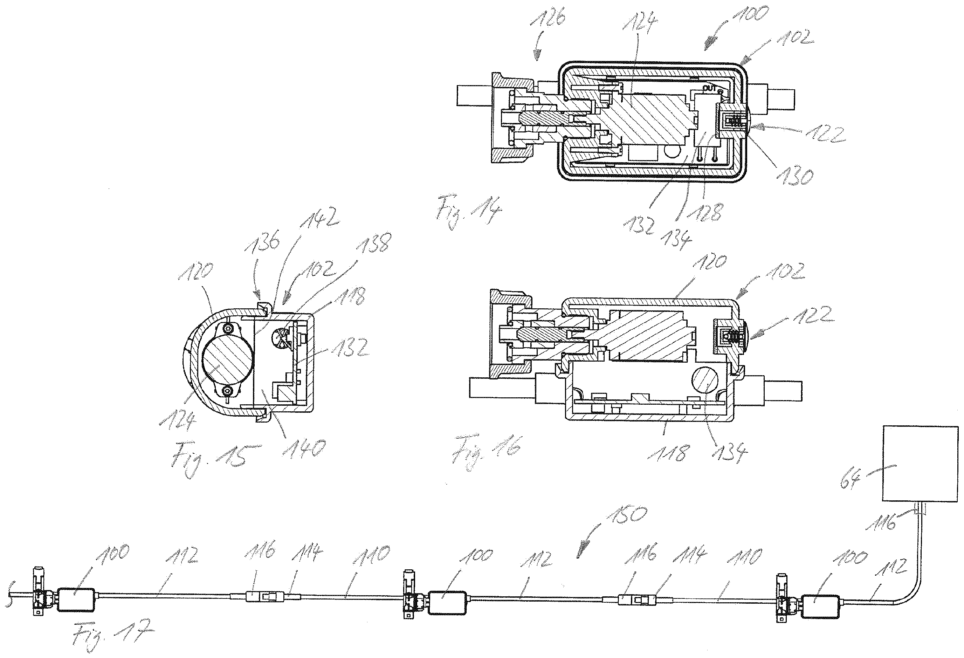

Speziell ist das Ventil 100 mit zwei Anschlusskabeln 110, 112 versehen, wobei das erste Anschlusskabel 110 mit einem elektrischen Steckverbinder 114 und das zweite Anschlusskabel 112 mit einem zweiten Steckverbinder 116 versehen ist. Der erste Steckverbinder 114 ist als Stecker, der zweite Steckverbinder 116 als Buchse ausgebildet, wobei die beiden Steckverbinder 114, 116 passend zueinander ausgebildet sind. Die beiden Steckverbinder 114, 116 sind allerdings nicht dafür vorgesehen, ineinander eingesteckt zu werden. Vielmehr soll der erste Steckverbinder 114 des Ventils 100 mit einem zweiten Steckverbinder eines identischen, benachbarten Ventils verbunden werden. Der zweite Steckverbinder 116 des Ventils 100 soll mit dem ersten Steckverbinder eines weiteren, benachbarten Ventils verbunden werden. Eine sich dadurch ergebende Ventilanordnung wird noch anhand der Fig. 17 erläutert. Die beiden Anschlusskabel 110, 112 sind für Standard-Düsenabstände von 50 cm vorgesehen und am Ventil 100 integriert. Eine Durchführung der beiden Anschlusskabel 110, 112 in das Ventilgehäuse 102 kann dadurch zuverlässig abgedichtet ausgebildet werden. Da die Anschlusskabel 110, 112 bereits an dem Ventilgehäuse 102 befestigt sind, wird die Montage des Ventils 100 erheblich erleichtert und vor allem sind Fehler bei der Installation oder bei der Reparatur einer erfindungsgemäßen Ventilanordnung auf einer Feldspritze praktisch ausgeschlossen. Auch verringert sich der Aufwand für die Lagerhaltung, da keine separaten Anschlusskabel zu den Ventilen 100 bereitgehalten werden müssen. Lediglich im Bereich von Gelenkstellen am Gestänge einer Feldspritze oder für den Anschluss der Ventile an eine Einzelventilsteuerung, siehe Fig. 17, können Verlängerungskabel erforderlich sein.

Das Ventilgehäuse 102 weist ein Unterteil 118 und einen Deckel 120 auf. Das Unterteil 118 und der Deckel 120 sind miteinander vergossen, was nachfolgend noch erläutert wird. Der Deckel 120 ist mit einer Belüftungsöffnung 122 versehen, die einen Druckausgleich zwischen dem Inneren des Gehäuses 102 und der Umgebung ermöglicht. Die Belüftungsöffnung 122 ist dabei mit einer luftdurchlässigen aber wasserundurchlässigen Membran verschlossen. Die Membran ist in der Darstellung der Fig. 11 nicht sichtbar, da sie zurückgesetzt angeordnet ist, um eine Beschädigung der Membran durch äußere Einflüsse, beispielsweise beim Abstrahlen mit einem Hochdruckreinger, zu verhindern.

In der Darstellung der Fig. 12 ist das Ventil 100 in einer Vorderansicht dargestellt. Zu erkennen ist der Düsenträger 106 sowie das zweiteilige Gehäuse 102 mit dem Deckel 120 und dem Unterteil 118. Das Unterteil 118 übergreift den Deckel 120 abschnittsweise, wobei in diesem Bereich, wie bereits ausgeführt, der Deckel 120 mit dem Gehäuse 118 vergossen ist. Die Anschlusskabel 112, 110 sind aus dem Unterteil 118 herausgeführt. In der Darstellung der Fig. 12 ist der zweite elektrische Steckverbinder 116 von vorne zu erkennen.

Die Darstellung der Fig. 13 zeigt eine Ansicht des Ventils 100 der Fig. 11 von oben. In dieser Ansicht ist der Deckel 120 sowie eine Oberkante des Unterteils 118 zu erkennen, die den Deckel 120, siehe Fig. 12 abschnittsweise übergreift.

Die Darstellung der Fig. 14 zeigt eine Schnittansicht des Ventils 100 in der Lage der Figur 13, also von oben. Die Schnittebene verläuft dabei durch die Antriebswelle eines Elektromotors 124 im Ventilgehäuse 102. Der Aufbau des Elektromotors 124 sowie des Ventilmechanismus 126 unterscheidet sich aber nicht von der Ausführungsform der Fig. 1 bis 7, siehe dort speziell Fig. 5 und Figur 7, so dass auf eine erneute Erläuterung verzichtet wird.

Zu erkennen ist in Fig. 14 der Aufbau der Belüftungsöffnung 122. Eine Durchgangsöffnung ist im Inneren des Gehäuses mit einer Membran 128 verschlossen, die, wie ausgeführt wurde, luftdurchlässig aber wasserundurchlässig ist. Ein Einsatz 130 in die Durchgangsöffnung ist labyrinthartig ausgebildet und ermöglicht dadurch den Durchgang von Luft, verhindert aber, dass beispielsweise der Wasserstrahl eines Hochdruckreinigers unmittelbar auf die Membran 128 trifft. Über die Belüftungsöffnung 122 kann das Innere des Ventilgehäuses 102 entlüftet werden und dadurch kann beispielsweise auch die Entstehung von Kondenswasser im Inneren des Gehäuses 102 verhindert werden.

Im Inneren des Gehäuses 102 ist eine Leiterplatte 132 zu erkennen, auf der lediglich schematisch elektronische Bauelemente dargestellt sind, die dann einen Spannungswandler sowie eine Ventilsteuerschaltung bilden. Ebenfalls auf der Leiterplatte 132 angeordnet ist ein Superkondensator 134.

In der Darstellung der Fig. 15 ist ebenfalls das Innere des Ventilgehäuses 102 zu erkennen. Das Unterteil 118 ist an seiner Oberseite mit einer rinnenförmigen Ausgestaltung 136 versehen, in die der Deckel 120 eingreift. Diese Rinne 136 wird nach Einschieben des Deckels 120 vergossen, so dass das Ventilgehäuse 102 mit Ausnahme der Belüftungsöffnung 122 zuverlässig gegen Einflüsse von außen abgedichtet ist.

Im Unterteil 118 ist die Leiterplatte 132 angeordnet. Zu erkennen ist in Fig. 15 eine Durchführung 138 für eines der Anschlusskabel. Die Leiterplatte 132 mit den darauf angeordneten elektronischen Bauteilen und dem Superkondensator 134 sowie auch die Durchgangsöffnungen 138 für die Anschlusskabel sind mit einer Vergußmasse 140 vergossen. Die Vergußmasse 140 erstreckt sich bis zu einer Ebene 142. Lediglich der Elektromotor 124 ist oberhalb der Vergußmasse 140 angeordnet. Die vollständige Elektronik und auch der Superkondensator 134 als Energiespeicher und die Kabeldurchführungen 138 sind innerhalb der Vergußmasse 140 angeordnet und dadurch zuverlässig wasserdicht.

In der Darstellung der Fig. 16 ist eine weitere Schnittansicht in seitlicher Lage dargestellt.

Die Darstellung der Fig. 17 zeigt eine erfindungsgemäße Ventilanordnung 150 mit insgesamt drei Ventilen 100. Die Ventilanordnung 150 ist lediglich abschnittsweise dargestellt, beispielsweise können in der in Fig. 17 dargestellten Art und Weise 48 Ventile miteinander verbunden werden. Ein erstes Anschlusskabel 110 des in Fig. 17 mittleren Ventils 100 ist mit dem Steckverbinder 114 in den Steckverbinder 116 des zweiten Anschlusskabels 112 des in Fig. 17 linken Ventils 100 eingesteckt. Das zweite Anschlusskabel 112 des mittleren Ventils 100 ist mit seinem Steckverbinder 116 in den Steckverbinder 114 am ersten Anschlusskabel 110 des in Fig. 17 rechten Ventils 100 eingesteckt. Das zweite Anschlusskabel 112 des in Fig. 17 rechten Ventils 100 ist mit einer Einzelventilsteuerung 64 verbunden, die, siehe Fig. 10, mit einer Zentralsteuerung an einer Feldspritze verbunden sein kann. Die Verbindung mit der Einzelventilsteuerung 64 erfolgt über den Steckverbinder 116 an dem zweiten Anschlusskabel 112 des in Fig. 17 rechten Ventils 100. Ersichtlich kann die Ventilanordnung 150 in sehr einfacher Weise aufgebaut werden und Fehler beim elektrischen Anschluss der Ventil 100 sind praktisch ausgeschlossen. Auch das Austauschen eines der Ventile 100 kann in sehr einfacher Weise erfolgen. Beim Austausch eines der Ventile 100 sowie bei der erstmaligen Installation der Ventilanordnung 150 erfolgt eine automatische Konfiguration der Ventile 100 über die Einzelventilsteuerung 64. Die Ventile 100 sind mittels einer Busleitung verbunden und kommunizieren über ein Busprotokoll.

## Patentansprüche

1. Ventilanordnung mit mehreren Ventilen für Spritzvorrichtungen für die Landtechnik, wobei die Ventile jeweils einen Ventilkörper, der relativ zu einem Ventilsitz (42) wenigstens eine Freigabestellung und eine Sperrstellung einnehmen kann, einen Elektromotor (46) zum Bewegen des Ventilsitzes (42) und/oder des Ventilkörpers (44) in die Freigabestellung und die Sperrstellung und einen elektrischen Energiespeicher (52) zum Bereitstellen von elektrischer Energie für den Elektromotor (46) aufweisen, wobei ein Spannungswandler vorgesehen ist, der ausgebildet ist, in einem ersten Betriebsmodus eine von dem Energiespeicher bereitgestellte erste Spannung in eine zweite, höhere Spannung zur Beaufschlagung des Elektromotors beim Bewegen des Ventilkörpers (44) und/oder des Ventilsitzes (42) umzuwandeln und **dadurch gekennzeichnet, dass** der Spannungswandler ausgebildet ist, in einem zweiten Betriebsmodus den Energiespeicher mit niedrigerer Stromaufnahme zu laden.

2. Ventilanordnung nach Anspruch 1, **dadurch gekennzeichnet, dass** der Spannungswandler ausgebildet ist, die Stromaufnahme des Energiespeichers im zweiten Betriebsmodus zu steuern oder zu regeln.

3. Ventilanordnung nach Anspruch 1 oder 2, **dadurch gekennzeichnet, dass** im zweiten Betriebsmodus eine dritte Spannung zum Laden des Energiespeichers niedriger ist als eine Versorgungsspannung des Spannungswandlers

4. Ventilanordnung nach einem der vorstehenden Ansprüche, **dadurch gekennzeichnet, dass** der Spannungswandler als Gleichspannungswandler ausgebildet ist.

5. Ventilanordnung nach einem der vorstehenden Ansprüche, **dadurch gekennzeichnet, dass** der Energiespeicher als Kondensator, insbesondere Superkondensator (52), ausgebildet ist.

6. Ventilanordnung nach wenigstens einem der vorstehenden Ansprüche, **gekennzeichnet durch** ein Ventilgehäuse (16), wobei der Elektromotor (46), der Spannungswandler, der Energiespeicher und eine Ventilsteuerschaltung (54) für den Elektromotor (46) und den Spannungswandler innerhalb des Ventilgehäuses (16) angeordnet sind und wobei der Spannungswandler, der Energiespeicher und die Ventilsteuerschaltung von einer wasserdichten Vergußmasse umgeben sind.

7. Ventilanordnung nach Anspruch 6, **dadurch gekennzeichnet, dass** ein Deckel des Ventilgehäuses mittels der Vergußmasse abgedichtet ist.

8. Ventilanordnung nach Anspruch 6 oder 7, **dadurch gekennzeichnet, dass** das Ventilgehäuse mit einer Belüftungsöffnung versehen ist, wobei die Belüftungsöffnung mit einer wasserdichten aber luftdurchlässigen Membran verschlossen ist.

9. Ventilanordnung nach wenigstens einem der vorstehenden Ansprüche 6 bis 8, **dadurch gekennzeichnet, dass** das Ventilgehäuse mit zwei elektrischen Steckverbindern (18, 20) versehen ist.

10. Ventilanordnung nach wenigstens einem der vorstehenden Ansprüche 6 bis 8, **dadurch gekennzeichnet, dass** das Ventilgehäuse mit zwei elektrischen Anschlußkabeln versehen ist, wobei jedes Anschlußkabel mit einem elektrischen Streckverbinder versehen ist und wobei die Steckverbinder passend zueinander ausgebildet sind.

11. Ventil nach einem der Ansprüche 6 bis 10, **dadurch gekennzeichnet, dass** die Ventilsteuerschaltung (54) innerhalb des Ventilgehäuses (16) angeordnet und für den Betrieb an einer Busleitung (62) ausgebildet ist.

12. Feldspritze, **gekennzeichnet durch** eine Ventilanordnung nach wenigstens einem der vorstehenden Ansprüche.

13. Feldspritze nach Anspruch 12, **dadurch gekennzeichnet, dass** jedes Ventilgehäuse (16) mit zwei elektrischen Steckverbindern (18, 20) versehen ist und die Ventile untereinander elektrisch mittels einer Kabelzuleitung (62) verbunden sind, wobei die Kabelzuleitung (62) von einem ersten Ventil (10) zu einem zweiten benachbarten Ventil (10) in den ersten Steckverbinder (18) und die Kabelzuleitung von dem ersten Ventil (10) zu einem dritten benachbarten Ventil (10) in den zweiten Steckverbinder (20) eingesteckt ist.

14. Feldspritze nach Anspruch 12, **dadurch gekennzeichnet, dass** jedes Ventilgehäuse mit zwei elektrischen Anschlusskabeln mit jeweils einem elektrischen Steckverbinder versehen ist, wobei die Ventile untereinander mittels der Anschlußkabel verbunden sind und wobei ein erstes Anschlusskabel eines ersten Ventils zu einem Anschlusskabel eines zweiten benachbarten Ventils führt und ein zweites Anschlusskabel des ersten Ventils zu einem Anschlusskabel eines dritten benachbarten Ventils führt.

## Claims

1. Valve assembly having a plurality of valves for spraying devices for agricultural technology, wherein the valves each include a valve body, which is capable of assuming at least one enable position and one disable position relative to a valve seat (42), an electric motor (46) for moving the valve seat (42) and/or the valve body (44) into the enable position and the disable position, and an electric energy storage device (52) for providing electric energy for the electric motor (46), wherein a voltage converter is provided and configured, in a first operation mode, to convert a first voltage provided by the energy storage device into a second, higher voltage to be applied to the electric motor during moving the valve body (44) and/or the valve seat (42) and **characterized in that** the voltage converter is configured, in a second operation mode, to charge the energy storage device with low power input.

2. Valve assembly according to claim 1, **characterized in that** the voltage converter is configured to control or to regulate power input of the energy storage device in the second operation mode.

3. Valve assembly according to claim 1 or 2, **characterized in that**, in the second operation mode, a third voltage for charging the energy storage device is lower than a supply voltage of the voltage converter.

4. Valve assembly according to any one of the preceding claims, **characterized in that** the voltage converter is a direct current (DC) voltage converter.

5. Valve assembly according to any one of the preceding claims, **characterized in that** the energy storage device is a capacitor, in particular a supercapacitor (52).

6. Valve assembly according to at least one of the preceding claims, **characterized by** a valve housing (16), wherein the electric motor (46), the voltage converter, the energy storage device, and a valve control circuit (54) for the electric motor (46) and the voltage converter are arranged within the valve housing (16), and wherein the voltage converter, the energy storage device and the valve control circuit are encased by a water-tight potting compound.

7. Valve assembly according to claim 6, **characterized in that** a cover of the valve housing is sealed by means of the potting compound.

8. Valve assembly according to claim 6 or 7, **characterized in that** the valve housing is provided with a ventilation hole, wherein the ventilation hole is closed by means of a water-tight but air-permeable membrane.

9. Valve assembly according to at least one of the preceding claims 6 to 8, **characterized in that** the valve housing is provided with two electric plug connectors (18, 20).

10. Valve assembly according to at least one of the preceding claims 6 to 8, **characterized in that** the valve housing is provided with two electric connector cables, wherein each connector cable is provided with an electric plug connector, and wherein the plug connectors are of mutually matching design.

11. Valve assembly according to any of claims 6 to 10, **characterized in that** the valve control circuit (54) is arranged within the valve housing (16) and configured for operation on a bus line (62).

12. Field sprayer, **characterized by** a valve assembly according to at least one of the preceding claims.

13. Field sprayer according to claim 12, **characterized in that** each valve housing (16) is provided with two electric plug connectors (18, 20) and the valves are mutually interconnected electrically by means of a cable supply line (62), wherein the cable supply line (62) from a first valve (10) to a second adjacent valve (10) is plugged into the first plug connector (18) and the cable supply line from the first valve (10) to a third adjacent valve (10) is plugged into the second plug connector (20).

14. Field sprayer according to claim 12, **characterized in that** each valve housing is provided with two electric connector cables each provided with an electric plug connector, wherein the valves are mutually interconnected by means of the connector cables, and wherein a first connector cable of a first valve leads to a connector cable of a second adjacent valve and a second connector cable of the first valve leads to a connector cable of a third adjacent valve.

## Revendications

1. Système de valves comprenant plusieurs valves pour des dispositifs de pulvérisation dans le domaine agricole, les valves présentant à chaque fois un corps de valve, qui peut adopter au moins une position de libération et une position de blocage par rapport à un siège de valve (42), un moteur électrique (46) pour déplacer le siège de valve (42) et/ou le corps de valve (44) dans la position de libération et dans la position de blocage et un accumulateur d'énergie électrique (52) pour fournir de l'énergie électrique au moteur électrique (46), un convertisseur de tension étant prévu, lequel est réalisé pour convertir, dans un premier mode de fonctionnement, une première tension fournie par l'accumulateur d'énergie en une deuxième tension plus élevée pour solliciter le moteur électrique lors du déplacement du corps de valve (44) et/ou du siège de valve (42), **caractérisé en ce que** le convertisseur de tension est réalisé pour charger l'accumulateur d'énergie avec une consommation de courant plus faible dans un deuxième mode de fonctionnement.

2. Système de valves selon la revendication 1, **caractérisé en ce que** le convertisseur de tension est réalisé pour commander ou réguler la consommation de courant de l'accumulateur d'énergie dans le deuxième mode de fonctionnement.

3. Système de valves selon la revendication 1 ou 2, **caractérisé en ce que** dans le deuxième mode de fonctionnement, une troisième tension pour charger l'accumulateur d'énergie est inférieure à une tension d'alimentation du convertisseur de tension.

4. Système de valves selon l'une quelconque des revendications précédentes, **caractérisé en ce que** le convertisseur de tension est réalisé sous forme de convertisseur de tension continue.

5. Système de valves selon l'une quelconque des revendications précédentes, **caractérisé en ce que** l'accumulateur d'énergie est réalisé sous forme de condensateur, en particulier de super condensateur (52).

6. Système de valves selon au moins l'une quelconque des revendications précédentes, **caractérisé par** un boîtier de valve (16), le moteur électrique (46), le convertisseur de tension, l'accumulateur d'énergie et un circuit de commande de valves (54) pour le moteur électrique (46) et le convertisseur de tension sont disposés à l'intérieur du boîtier de valve (16), et le convertisseur de tension, l'accumulateur d'énergie et le circuit de commande de valve étant entourés par une masse de scellement imperméable à l'eau.

7. Système de valves selon la revendication 6, **caractérisé en ce qu'**un couvercle du boîtier de valves est étanchéifié au moyen de la masse de scellement.

8. Système de valves selon la revendication 6 ou 7, **caractérisé en ce que** le boîtier de valves est pourvu d'une ouverture de ventilation, l'ouverture de ventilation étant fermée avec une membrane imperméable à l'eau mais perméable à l'air.

9. Système de valve selon au moins l'une quelconque des revendications précédentes 6 à 8, **caractérisé en ce que** le boîtier de valves est pourvu de deux connecteurs électriques enfichables (18, 20).

10. Système de valve selon au moins l'une quelconque des revendications précédentes 6 à 8, **caractérisé en ce que** le boîtier de valves est pourvu de deux câbles de raccordement électriques, chaque câble de raccordement étant pourvu d'un connecteur électrique enfichable et les connecteurs enfichables étant réalisés de manière adaptée l'un à l'autre.

11. Valve selon l'une quelconque des revendications 6 à 10, **caractérisée en ce que** le circuit de commande de valves (54) est disposé à l'intérieur du boîtier de valves (16) et est réalisé de manière à fonctionner sur une ligne bus (62).

12. Pulvérisateur agricole, **caractérisé par** un système de valves selon au moins l'une quelconque des revendications précédentes.

13. Pulvérisateur agricole selon la revendication 12, **caractérisé en ce que** chaque boîtier de valves (16) est pourvu de deux connecteurs électriques enfichables (18, 20), et les valves sont connectées les unes aux autres électriquement au moyen d'une ligne d'alimentation par câble (62), la ligne d'alimentation par câble (62) conduisant d'une première valve (10) à une deuxième valve adjacente (10) étant enfichée dans le premier connecteur enfichable (18) et la ligne d'alimentation par câble conduisant de la première valve (10) à une troisième valve adjacente (10) étant enfichée dans le deuxième connecteur enfichable (20).

14. Pulvérisateur agricole selon la revendication 12, **caractérisé en ce que** chaque boîtier de valves est pourvu de deux câbles de raccordement électriques ayant chacun un connecteur électrique enfichable, les valves étant connectées les unes aux autres au moyen des câbles de raccordement et un premier câble de raccordement d'une première valve conduisant à un câble de raccordement d'une deuxième valve adjacente et un deuxième câble de raccordement de la première valve conduisant à un câble de raccordement d'une troisième valve adjacente.
